# EUROPEAN PATENT APPLICATION

(11) **EP 1 260 337 A1**
(43) Date of publication of application: **27.11.2002**
(21) Application number: 02011186.0
(22) Date of filing: 21.05.2002
(51) Int. Cl.: B28B 21/96, B29C 69/00, B29C 47/90, H01B 19/00

(54) **Peeling apparatus of extrusion material batch**

(30) Priority: 22.05.2001 JP 2001151844
(71) Applicant: NGK INSULATORS, LTD., Nagoya City Aichi Pref. (JP)
(72) Inventor: Yokoi, Koji, Nagoya City, Aichi Pref. (JP); Yamamoto, Tsutomu, Nagoya City, Aichi Pref. (JP); Koyama, Makoto, Nagoya City, Aichi Pref. (JP)
(74) Representative: Leson, Thomas Johannes Alois, Dipl.-Ing.

(57) **Abstract**

In a peeling apparatus of an extrusion material batch, a circular blade (13) is arranged at an outlet portion (10) of a kneader, and an outer surface of the extrusion material batch extruded from the outlet portion (10) is peeled uniformly. It is preferred to arrange a longitudinal blade (14) for cutting the peeled waste materials in a radial direction at a periphery of the circular blade (13). Since a water content of the peeled waste materials is not varied, they can be returned as they are to the inlet hopper of the kneader via a transfer line.

## Description

### Background of the Invention

### (1) Field of the Invention

The present invention relates to a peeling apparatus of an extrusion material batch used for producing an insulator as a raw material batch.

### (2) Prior Art Statement

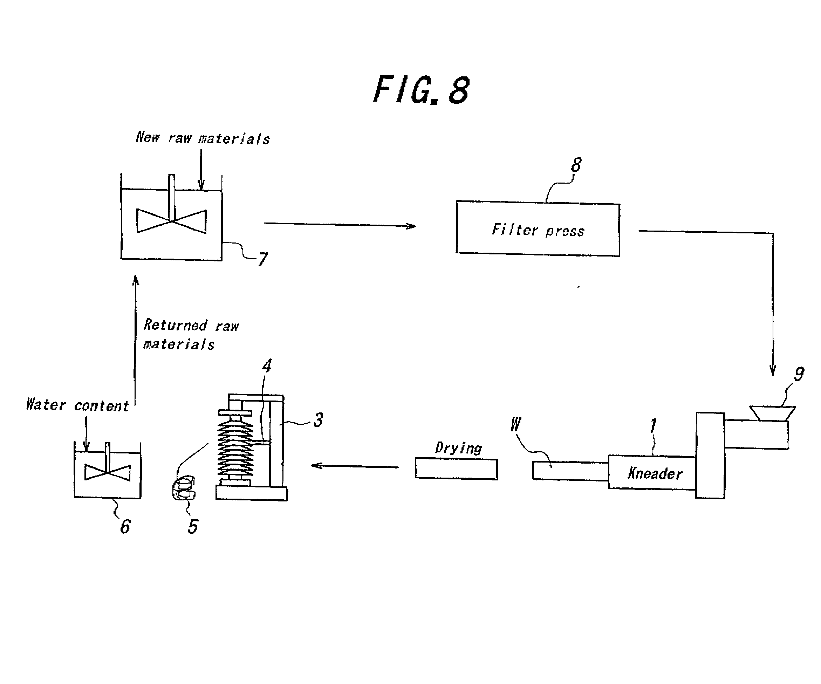

In the case of producing a porcelain insulator (including a porcelain tube), as shown in Fig. 8, mixed raw materials are extruded from an outlet portion 2 of a kneader 1 as an extrusion material batch W having a rod shape or a cylindrical shape. Then, the extrusion material batch W is cut to a predetermined length by means of a cutting apparatus, and the thus cut extrusion material batch W is dried to predetermined moisture preferable for forming. Then, the dried extrusion material batch W is set to an insulator working machine 3 as a vertical lathe and is rotated around a vertical axis. Under such a condition, the dried extrusion material batch W is machined by a bite 4 so as to obtain an objective insulator shape.

In this machining step, a large number of machined waste materials 5 are generated. However, such machined waste materials 5 are not returned to the kneader as they are, since a water content of the machined waste materials 5 is decreased after machining. Therefore, a large number of the machined waste materials 5 are once dissolved in a tank 6 so as to obtain slurry, and the slurry is transferred into a raw material mix tank 7 as returned raw materials. In a mixing step in the raw material mix tank 7, the returned raw materials are mixed with new raw materials with taking into consideration of water content of the returned raw materials and a mixing ratio. Then, the thus mixed raw materials are dehydrated by means of a filter press 8. After that, the thus dehydrated raw materials are supplied into an inlet hopper 9 of the kneader 1.

In the known producing method mentioned above, a large cost is required for a recycling step of the machined waste materials 5. That is, it is necessary to repeat the following step such that a water is added again to the once dried machined waste materials 5 and the machined waste materials 5 after adding a water is dehydrated by means of the filter press 8. Therefore, it is apparent that a lot of trouble and energy are required.

In order to eliminate the drawbacks mentioned above, various ideas for reducing an amount of the machined waste materials 5 are designed at a production site. Among them, it is most effective to set a diameter of the extrusion material batch W to be equal to a diameter of the insulator to be produced. However, kinds of the insulators are remarkably large since applications of the insulators are much. Therefore, a diameter of the insulator to be produced is varied by a unit of mm, while a diameter of the outlet portion 2 is actually designed to be varied by a unit of several tens mm since it is necessary to take a lot of time and effort for varying a diameter of the outlet portion 2 of the kneader 1 assembled in a production line.

On this account, it is often the case that the extrusion material batch W having a diameter larger than that of the insulator to be produced is used. In this case, a large amount of the machined waste materials 5 are generated, and thus it requires a lot of trouble and energy for recycling. It should be noted that a reason of requiring a lot of time and effort for varying a diameter of the outlet portion 2 of the kneader 1 is as follows. That is, it is not possible to perform a normal extruding operation of the batch, if only a tip diameter is reduced. Therefore, it is necessary to vary a diameter gradually for a long section.

Moreover, since an outermost peripheral portion of the extrusion material batch W causes a shed failure of the insulator due to its streamline if it is used as it is without machining, the outer most peripheral portion of the extrusion material batch W must be machined along a predetermined width on an overall circumference. This is also an important cause of generating a lot of the machined waste materials 5 in the machining step.

### Summary of the Invention

An object of the present invention is to eliminate the drawbacks mentioned above and to provide a peeling apparatus of an extrusion material batch which can reduce a generation of the machined waste materials in a machining step and which can reduce a lot of trouble and energy required for recycling the machined waste materials.

According to the invention, a peeling apparatus of an extrusion material batch comprises, a circular blade arranged at an outlet portion of a kneader and for peeling an outer surface of said extrusion material batch extruded from said outlet portion uniformly. In the present invention, it is preferred that a longitudinal blade for cutting the peeled waste materials in a radial direction is arranged at a periphery of said circular blade. Moreover, it is preferred that a guide for introducing said peeled waste materials cut by said longitudinal blade into a lower pit is arranged at a downstream side of said circular blade. Further, it is preferred that a transfer line for transferring said peeled waste materials in said pit to an inlet hopper of said kneader.

In the peeling apparatus of the extrusion material batch according to the invention, it is possible to peel off the periphery of the extrusion material batch W supplied from the outlet portion of the kneader uniformly by means of the circular blade. Since a water content of the peeled waste materials is substantially equal to that of the raw materials in the kneader, it is possible to reuse the peeled waste materials as they are by transferring them into the inlet hopper of the kneader. In this manner, the outermost peripheral portion of the extrusion material batch W, which is not used for the insulator as it is, is peeled off just after being supplied from the outlet portion of the kneader. In this case, it is possible to make a diameter of the circular blade close to a diameter of the insulator to be produced. Therefore, it is possible to reduce a generation amount of the machined waste materials in the machining step. In addition, according to the peeling apparatus of the extrusion material batch of the present invention, it is possible to vary a diameter of the extrusion material batch easily if the circular blade is exchanged. Therefore, it is not necessary to take a lot of time and effort as the known one.

### Brief Description of the Drawing

For a better understanding of the present invention, explanations are made to the following drawings wherein:
Fig. 1 is a cross sectional view showing one embodiment of a peeling apparatus of an extrusion material batch according to the invention;
Fig. 2 is a right side view of the embodiment shown in Fig. 1, which is partly cut out;
Fig. 3A is a cross sectional view of a circular blade and Fig. 3B is a side view of the circular blade;
Fig. 4 is a perspective view illustrating a relation between the circular blade and a longitudinal blade;
Fig. 5 is an enlarged cross sectional view depicting a main portion of a peeling condition by means of the circular blade;
Fig. 6 is a perspective view showing a discharge condition of the peeled waste materials;

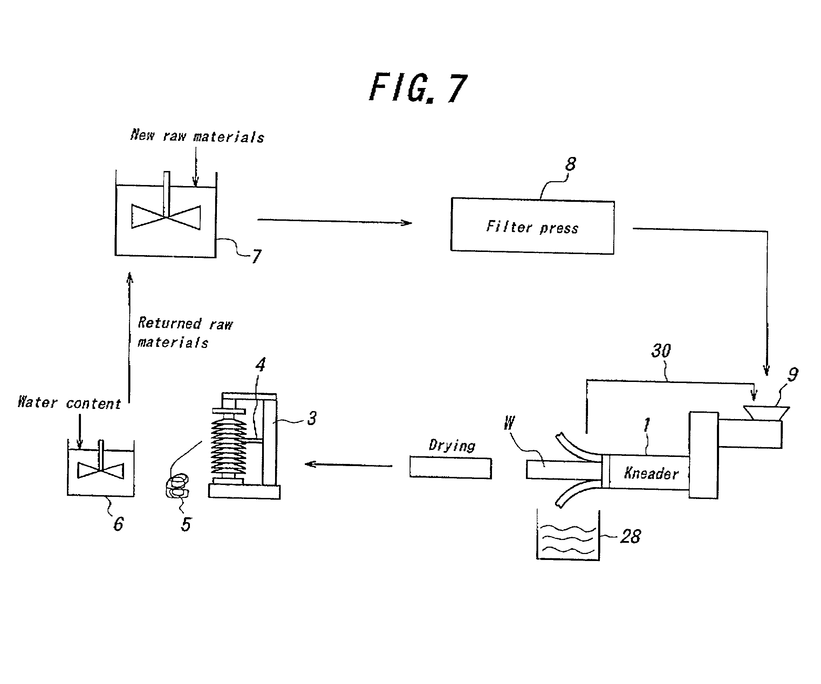

Fig. 7 is a schematic view explaining a recycling route of the peeled waste materials and the machined waste materials according to the invention; and
Fig. 8 is a schematic view explaining a recycling route of the machined waste materials according to the known apparatus.

### Description of the Preferred Embodiments

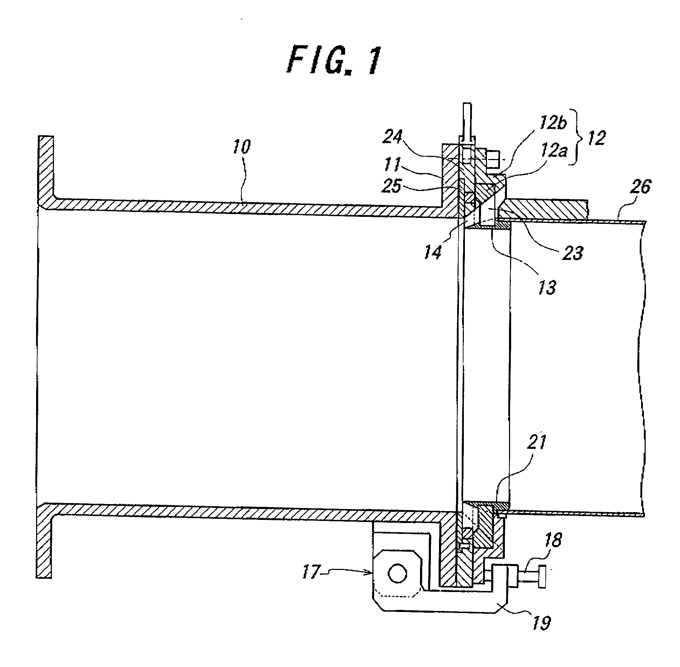

Hereinafter, the present invention will be explained with preferred embodiments. In Fig. 1, a numeral 10 is a cylindrical outlet portion of a kneader, and a peeling apparatus of an extrusion material batch according to the invention is provided to an end flange 11 of the outlet portion 10. The peeling apparatus according to the invention comprises a ring-shaped main body 12, a circular blade 13 supported by the main body 12 and a plurality of longitudinal blades 14. The main body 12 is constructed by inner and outer two members (12a, 12b).

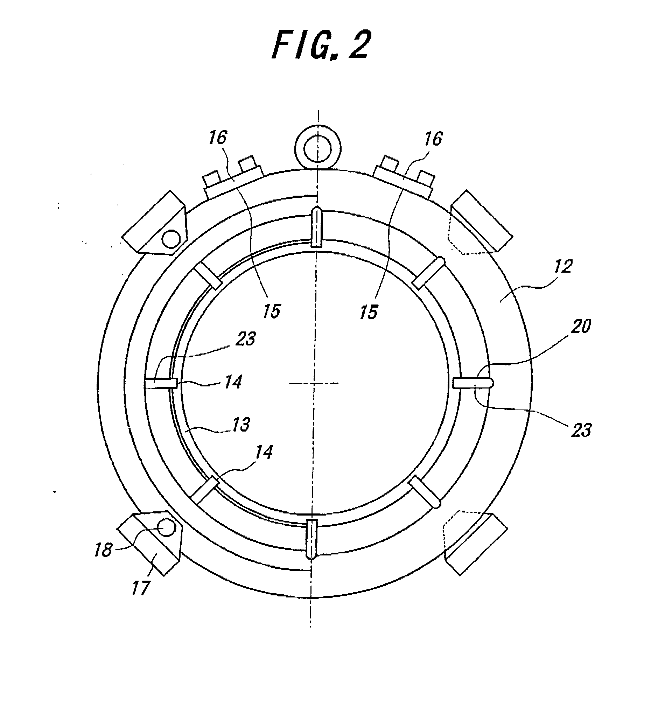

As shown in Fig. 2, two planar portions 15 are arranged symmetrically on an upper portion of the end flange 11 of the outlet portion 10. In this embodiment, two contact plates 16 projected from the main body 12 of the peeling apparatus are closely contacted to the planar portions 15 respectively, thereby easily aligning a positional relation between the outlet portion 10 and the main body 12 of the peeling apparatus. Moreover, four clamps 17 are arranged around the end flange 11 and the main body 12 and function to firmly fix the main body 12 of the peeling apparatus to the end flange 11 of the outlet portion 10. In this case, it is preferred to design each clamps 17 in such a manner that the main body 12 can be detached from the end flange 11 of the outlet portion 10 on the basis of the principle of leverage by loosening a bolt 18 and opening an arm 19 outward.

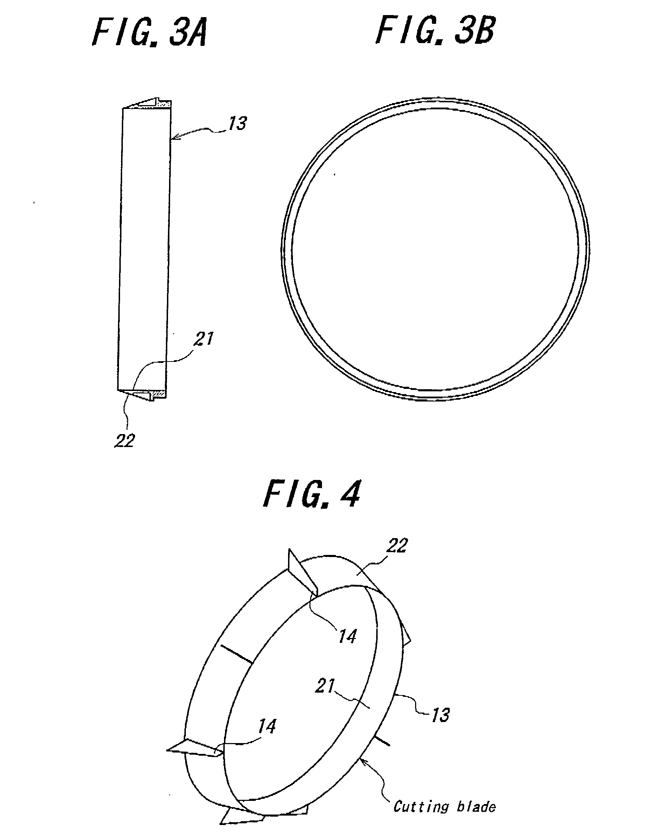

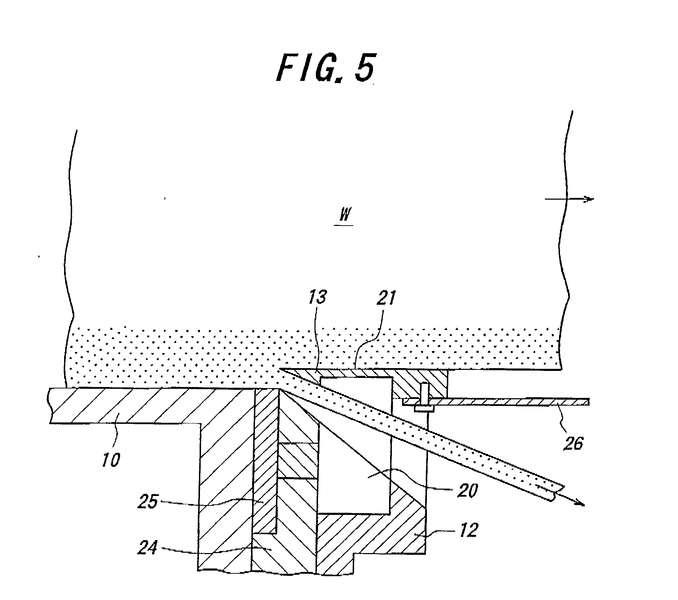

In the circular blade 13, an inner surface 21 has a complete cylindrical shape as shown in Fig. 3 and Fig. 5, but an outer surface 22 clipping a sharp cutting edge is gradually expanded like a taper shape. As shown in Fig. 2, a plurality of longitudinal blade holders 23 are embedded in radial recesses 20 arranged in the main body 12, and the circular blade 13 is screwed to an inner end of the longitudinal blade holder 23. In this manner, the circular blade 13 is fixed at a center of the main body 12. In this embodiment, the thin longitudinal blade 14 is embedded exchangeable in a slit arranged at a tip of respective longitudinal blade holders 23, and an inner tip end of the longitudinal blade 14 is contacted to the cutting blade of the circular blade 13. As a result, as shown in Fig. 4 conceptually, the longitudinal blades 14 are arranged radial at a plurality of positions on an outer periphery of the circular blade 13. Since theses circular blade 13 and the longitudinal blade 14 are worn by use, these blades are arranged in an easily exchangeable manner by detaching and disassembling them from the main body 12.

In Fig. 1 and Fig. 5, a numeral 24 is a press ring for the longitudinal blade holder 23 and a numeral 25 is an end ring for fixing the press ring 24 to the main body 12. Moreover, as shown in Fig. 1, a cylindrical protection cover 26 is fixed along a preferable length at a downstream side of the circular blade 13.

In the peeling apparatus of the extrusion material batch according to the invention having the construction mentioned above, a plurality of preset circular blades, wherein an inner diameter of the circular blade 13 is set to be smaller than the end flange 11 of the outlet portion 10 by several mm - several tens mm, are prepared previously. Among theses preset circular blades, the circular blade 13 having a size corresponding to a diameter of the insulator to be produced is selected, and the selected circular blade 13 is attached to the end flange 11 of the outlet portion 10 for use. This attachment of the circular blade 13 can be easily performed by utilizing the contact plate 16 and the clamp 17.

As shown in Fig. 5, the outer peripheral portion of the extrusion material batch W having rod shape or cylindrical shape supplied from the outlet portion 11 of the kneader 1 is peeled uniformly by means of the circular blade 13. The peeled waste materials are slightly bent outward by means of an outer taper of the circular blade 13 and are cut in a radial direction by means of the longitudinal blade 14 at the same time.

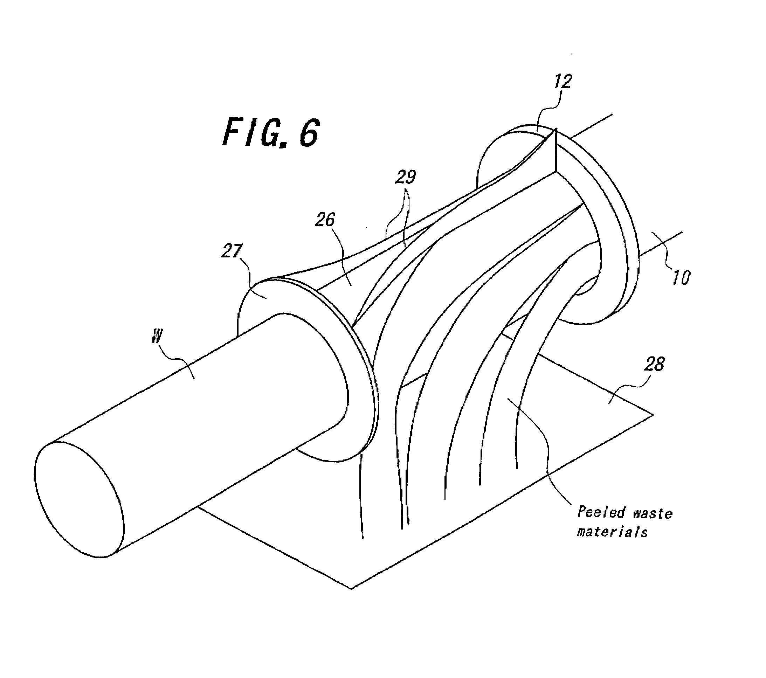

Fig. 6 is a perspective view showing this peeling condition. As shown in Fig. 6, the peeled waste materials are flowed downward along a surface of the protect cover 26. Therefore, the peeled waste materials are not contacted to the center extrusion material batch W that is transferred to the insulator forming apparatus 3. A flange-shaped projection 27 is arranged at a downstream end portion of the protection cover 26, and thus the peeled waste materials are contacted to the flange-shaped projection 27 and are continuously dropped into a pit 28 arranged downward. In this embodiment, it is preferred to arrange a wedge-shaped expanding guide 28 as shown in Fig. 6 at a downstream position on an upper surface of the protection cover 16, so that the peeled waste materials are smoothly introduced into the pit 28.

The peeled waste materials dropped in the pit 28 are returned to an inlet hopper 9 of the kneader 1 via a direct transfer line 30 and are used again as raw materials of the extrusion material batch W. On the other hand, the extrusion material batch W, the peripheral portion of which is uniformly peeled by means of the circular blade 13, is cut to a predetermined length as it the same as the known apparatus. Then, the cut extrusion material batch W is dried to a water content preferably for forming. After that, the dried extrusion material batch W is machined to an insulator shape by means of the insulator forming apparatus 3. Since the outer peripheral portion of the extrusion material batch W, which is not used for the insulator, is removed by the circular blade 13, a machining amount of the insulator forming apparatus 3 can be remarkably reduced as compared with the known apparatus, and thus it is possible to decrease a generation amount of the machined waste materials. As is the same as the known apparatus, the machined waste materials, which are generated by the insulator forming apparatus 3, are dissolved in the tank 6 to obtain a slurry, and the thus obtained slurry is transferred to the raw material mix tank 7 as the returned raw materials.

As mentioned above, in the peeling apparatus of the extrusion material batch according to the invention, it is possible to peel off uniformly the outer peripheral portion of the extrusion material batch W supplied from the outlet portion 11 of the kneader 1, which is not preferably used for the insulator product, by means of the circular blade 13. Since a water content of the peeled waste materials is substantially same as that of thee raw materials in the kneader, it is possible to reuse the peeled waste materials as they are by returning them to the inlet hopper of the kneader 1. Moreover, since a diameter of the circular blade 13 can be made closer to that of the insulator to be produced, it is possible to remarkably reduce a generation amount of the machined waste materials in the machining step.

As a result, the following advantage can be obtained. That is, in the known apparatus, all the waste materials of the extrusion material batch W that are not used for the insulator product are dissolved, mixed and dehydrated by the filter press so as to recycle them. On the other hand, according to the invention. since substantially all the waste materials can be returned into the inlet hopper of the kneader 1 as they are as the peeled waste materials, it is possible to remarkably reduce a recycling amount of the machined waste materials as compared with the known apparatus. Therefore, it is possible to largely reduce trouble and energy for recycling.

Moreover, according to the invention, since the outermost peripheral portion of the extrusion material batch W, which is not used for the insulator product, by means of the circular blade 13, it is not necessary to machine the outermost peripheral portion of the extrusion material batch W in the machining step, and thus a load for the insulator forming apparatus 3 can be reduced. Therefore, it is possible to shorten the machining time required in the machining step.

According to the peeling apparatus of the invention, even in the case that a diameter of the insulator to be produced is varied, it is possible to easily change a diameter of the extrusion material batch W by only exchanging the circular blade 13. Therefore, it is not necessary to change a part of the kneader along a long section as the known apparatus. Only the circular blade 13 can be exchangeable. However, the preset circular blades wherein the circular blade 13 having a different diameter is set previously to the main body 12 as mentioned above are prepared, and all the preset circular blades may be exchanged corresponding the insulator diameter to be produced.

In the case of exchanging, the extrusion material batch W is firstly cut out. However, since the extrusion material batch W is packed in the main body 12 and in the circular blade 13, a large force is required for deviating the main body 12 in the axial direction from the above conditions. Therefore, it is preferred to design the construction such that the main body 12 can be detached from the end flange 11 by utilizing the principle of leverage by opening the arm 19 of the clamp 17 outward as mentioned above. If the main body 12 is slightly moved by operating the clamp 17, the main body 12 can be removed from the extrusion material batch W packed therein. Therefore, after that, it is possible to easily slide the main body 12 in the axial direction so as to perform the exchanging operation.

As explained above, according to the peeling apparatus of the extrusion material batch of the invention, it is possible to remarkably reduce a generation amount of the machined waste materials in the machining step and also it is possible to reduce a lot of trouble and energy required for recycling the machined waste materials. Moreover, since it is possible to reduce the machining operation of the batch in the machining step, it is possible to shorten the machining time.

In a peeling apparatus of an extrusion material batch, a circular blade is arranged at an outlet portion of a kneader, and an outer surface of the extrusion material batch extruded from the outlet portion is peeled uniformly. It is preferred to arrange a longitudinal blade for cutting the peeled waste materials in a radial direction at a periphery of the circular blade. Since a water content of the peeled waste materials is not varied, they can be returned as they are to the inlet hopper of the kneader via a transfer line.

## Claims

1. A peeling apparatus of an extrusion material batch comprising, a circular blade arranged at an outlet portion of a kneader and for peeling an outer surface of said extrusion material batch extruded from said outlet portion uniformly.

2. The peeling apparatus of an extrusion material batch according to claim 1, wherein a longitudinal blade for cutting peeled waste materials in a radial direction is arranged at a periphery of said circular blade.

3. The peeling apparatus of an extrusion material batch according to claim 2, wherein a guide for introducing said peeled waste materials cut by said longitudinal blade into a lower pit is arranged at a downstream side of said circular blade.

4. The peeling apparatus of an extrusion material batch according to claim 3, wherein a transfer line for transferring said peeled waste materials in said pit to an inlet hopper of said kneader.

5. The peeling apparatus of an extrusion material batch according to claim 1, wherein said circular blade is exchangeable so as to vary its diameter.
